# EUROPÄISCHE PATENTSCHRIFT

(11) **EP 1 196 285 B1**
(45) Veröffentlichungstag und Bekanntmachung des Hinweises auf die Patenterteilung: **02.11.2006**
(21) Anmeldenummer: 00947969.2
(22) Anmeldetag: 11.07.2000
(51) Int. Cl.: B32B 27/12, A41D 31/02

(54) **WASSERDAMPF TRANSPORTIERENDER FLEXIBLER VERBUNDSTOFF**
FLEXIBLE COMPOSITE MATERIAL, PERMEABLE TO WATER VAPOUR
TISSU COMPOSITE SOUPLE LAISSANT PASSER LA VAPEUR D'EAU

(30) Priorität: 13.07.1999 DE 19932164
(43) Veröffentlichungstag der Anmeldung: 17.04.2002
(73) Patentinhaber: Vaude Sport GmbH & Co. KG, 88069 Tettnang (DE)
(72) Erfinder: ENGERS, Stefan, D-88069 Tettnang (DE)
(74) Vertreter: Engelhardt, Guido
(86) Internationale Anmeldenummer: PCT/EP2000/006570
(87) Internationale Veröffentlichungsnummer: WO 2001/003919

(56) Entgegenhaltungen:
- EP-A- 0 542 491
- EP-A- 0 707 802
- WO-A-94/19178
- DE-A- 4 003 764
- DE-A- 4 132 427
- US-A- 5 043 209
- DATABASE WPI Section Ch, Week 199415 Derwent Publications Ltd., London, GB; Class A25, AN 1994-124453 XP002151311 & JP 06 073669 A (SEIKO KASEI KK), 15. März 1994 (1994-03-15)

## Beschreibung

Die Erfindung bezieht sich auf einen flexiblen Verbundstoff zur Herstellung von wetterfesten Bekleidungsstücken, Zelten, Schlafsäcken, Schuhen und Schuhzwischenwänden oder ähnlichen im Außenbereich einsetzbaren Gegenständen, der aus einer Außenlage aus einem textilen Gewebe oder dergleichen als Oberstoff, einer hydrophilen Membran und einer durch ein textiles Flächengebilde oder durch eine Schichtauflage auf der Membran bestehenden Innenlage zusammengesetzt ist.

Membrangewebe dieser Art sind in zahlreichen unterschiedlichen Ausgestaltungen bekannt und haben sich in der Praxis auch bewährt. Bei einem dieser vielseitig verwendeten, dreilagigen Verbundstoff besteht die Innenlage aus einem Wasserdampf durchlässigen Futterstoff, so dass der sich zwischen dem Träger eines aus diesem Verbundstoff hergestellten Gegenstandes, beispielsweise einer Jacke, und dieser bildende Wasserdampf aufgrund des durch die Temperaturunterschiede sich ergebenden höheren Innendruckes durch den Futterstoff und die Membran nach außen diffundiert und auf der Außenlage verdunstet. Wasserperlen werden von dieser hydrophoben Innenlage aber nicht bzw. nur über einen längeren Zeitraum aufgenommen. Die Abführung von größeren Mengen an Flüssigkeit, die bei größerer körperlicher Anstrengung durch Schweißbildung unumgänglich ist, ist demnach unzureichend. Vielmehr tritt in der Innenlage ein Wasserstau auf, der bei dem Träger eines aus diesem Verbundstoff hergestellten Kleidungsstückes ein unangenehmes Nässegefühl hervorruft und auch zu Erkältungen führen kann.

Aufgabe der Erfindung ist es daher, einen flexiblen Verbundstoff der vorgenannten Gattung in der Weise auszubilden, dass mittels des Verbundstoffes nicht nur Wasserdampf in kurzer Zeit von innen nach außen zu transportieren ist, sondern dass vor allem auch Flüssigkeit rasch nach Außen abgeführt werden wird. Außer den Eigenschaften, atmungsaktiv und winddicht zu sein, die weitgehend auf die hydrophile Membran zurückzuführen sind, soll auch Wasser sofort von der Innenlage aufgenommen und über die Membran in die Außenlage abgeleitet werden. Der dazu erforderliche Material- und Fertigungsaufwand soll gering gehalten werden, dennoch soll eine außerordentlich gute Funktionsweise, insbesondere in bezug auf die Abführung von Flüssigkeit, gegeben sein.

Gemäß der Erfindung wird dies bei einem flexiblen Verbundstoff der eingangs genannten Art dadurch erreicht,
dass das textile Flächengebilde der Innenlage des Verbundstoffes ein Vließstoff ist, der hydropisch ausgerüstet ist, oder dass die schichtauflage der Membran aus einer Membran besteht, die hydropisch ausgebildet ist.

Um den Effekt der Wasserabführung zu steigern, ist es vorteilhaft, der zwischen der Außenlage und der Innenlage des Verbundstoffes angeordneten hydrophilen Membran eine hydropisch reagierende Schicht zuzuordnen, die zwischen der hydrophilen Membran und der Innenlage vorzusehen ist.

Die hydropisch reagierende Schicht kann hierbei durch ein entspanntes textiles Gewebe, durch eine feuchtigkeitsvernetzende Klebeschicht oder eine microporöse Polyurethanschicht, durch einen Vliesstoff oder durch eine Schaumstoffschicht gebildet sein.

Zweckmäßig ist es, wenn das hydrophile textile Flächengebilde des Verbundstoffes mittels eines hydrophilen Klebstoffes an der hydrophilen Membran befestigt ist, wobei der Vliesstoff durch einen hydrophilen Klebstoff verfestigt sein sollte.

Nach einer Weiterbildung kann die Innenlage des Verbundstoffes auf der Innenseite mit einer zweiten hydrophilen Membran versehen sein, und die beiden Membrane sollten mit Abstand zueinander angeordnet sein, wobei der inneren und/oder der äußeren Membran des Verbundstoffes eine hydropisch reagierende Schicht aus einem entspannten textilen Gewebe, einer Klebeschicht oder einer microporösen Polyurethanschicht, einem Vliesstoff oder einer Schaumstoffschicht zugeordnet und zwischen den beiden Membranen als Abstandshalter und/oder Wasserspeicher und/oder als Isolierung eine ein- oder mehrteilige hydropische Schicht, ein Gewebe, ein Vlies, eine microporöse Polyurethanschicht oder dgl. vorgesehen sein kann.

Die zwischen der Außenlage und der Innenlage des Verbundstoffes angeordnete hydrophile Membran des Verbundstoffes kann auch aus zwei oder mehreren Schichten bestehen, wobei die der Innenlage des Verbundstoffes zugekehrte Schicht hydrophil reagierend auszubilden ist.

Die hydrophile Membran kann aus Copolyetherester Copolymeren, Copolyether Amide oder aus Polyurethan hergestellt sein.

Des weiteren kann der die Aussenlage des Verbundstoffes bildente Oberstoff aus Leder gebildet sein.

Die Innenlage kann ganz oder teilweise oder nur in den Randbereichen eines Bekleidungsstückes oder eines anderen Gegenstandes mit der hydrophilen Membran oder der hydropischen Schicht verbunden, beispielsweise verklebt oder vernäht, sein. Es ist aber auch möglich, die hydropisch reagierende Schicht als Träger fest an der hydrophilen Membran anzubringen und die Membran mit der Außenlage und die Innenlage oder die hydropisch reagierende Schicht mit der Innenlage und der Membran sowie der Außenlage ganz oder teilweise oder nur in den Randbereichen eines Bekleidungsstückes oder eines anderen Gegenstandes miteinander zu verbinden, beispielsweise anzukleben oder zu vernähen.

Nach weiteren Ausführungsvarianten kann die Außenlage als Träger der hydrophilen Membran fest an dieser und die hydropisch reagierende Schicht fest an der Innenlage des Verbundstoffes angebracht und die Außenlage mit der Membran und die Innenlage mit der hydropisch reagierenden Schicht nur in den Randbereichen eines Bekleidungsstückes oder eines ähnlichen Gegenstandes miteinander verbunden, beispielsweise verklebt oder vernäht, sein, oder es kann die Innenlage als Träger der hydrophilen Membran fest an dieser angebracht und die Innenlage mit der Membran, der hydropisch wirkenden Schicht sowie der Außenlage nur in den Randbereichen eines Kleidungsstückes oder eines ähnlichen Gegenstandes miteinander verbunden, beispielsweise verklebt oder vernäht, sein.

Wird ein flexibler Verbundstoff gemäß der Erfindung ausgebildet, so ist nicht nur ein von außen wasserdichtes und von innen wasserdampfdurchlässiges textiles Flächengebilde, das in äußerst vielseitiger Weise verwendet werden kann, geschaffen, sondern vor allem ist gewährleistet, daß auch größere Mengen an Flüssigkeit, und zwar in Form von Wassertropfen, in sehr kurzer Zeit von innen nach außen transportiert werden. Die hydrophile Innenlage nimmt nämlich in einem erheblichen Maße Feuchtigkeit auf und verteilt diese in kurzer Zeit über einen größeren Bereich, so daß ein Wassertropfen, der sich auf der Innenlage niederschlägt, sofort aufgesogen wird und auf deren Oberfläche nicht mehr sichtbar ist. Und da die auf der Innenseite des Verbundstoffes anfallende Flüssigkeit somit großflächig der hydrophilen Membran zugeführt wird, kann die Feuchtigkeit auch rasch diese durchdringen und in die Außenlage gelangen, aus der die Feuchtigkeit großflächig in die Atmosphäre abgegeben wird.

Mit sehr geringem Materialaufwand, aber aufgrund der Erkenntnis, die Innenlage zur Aufnahme und Verteilung von tropfenförmig anfallender Feuchtigkeit auszubilden, ist somit ein flexibler Verbundstoff geschaffen, der äußerst vielseitig und vorteilhaft einsetzbar ist und der einen raschen Abtransport von der Innenlage zugeführter Flüssigkeit ermöglicht. Wassertropfen werden dabei sofort aufgenommen, Wasserflecken entstehen demnach nicht und sind nicht sichtbar, so daß auch ein optisch ansprechender und leicht zu verarbeitender Verbundstoff gegeben ist.

In der Zeichnung sind einige Ausführungsvarianten des gemäß der Erfindung ausgebildeten flexiblen Verbundstoffes dargestellt, die nachfolgend im einzelnen erläutert sind.

Hierbei zeigen:
- Fig. 1 und 2: einen aus drei Lagen gebildeten textilen Verbundstoff in unterschiedlichen Ausgestaltungen ,
- Fig. 3: den Verbundstoff nach Fig. 1 mit einer zusätzlichen, der Membran zugeordneten hydropisch reagierenden Schicht,
- Fig. 4 bis 10: den Verbundstoff nach den Fig. 1 und 3 mit zwei Membranen und diesen zugeordneten hydropisch reagierenden Schichten,
- Fig. 11 bis 15: den Verbundstoff nach Fig. 3 in unterschiedlichen Verbindungen der einzelnen Lagen miteinander und
- Fig. 16: die Funktionsdarstellung des Verbundstoffes nach Fig. 1

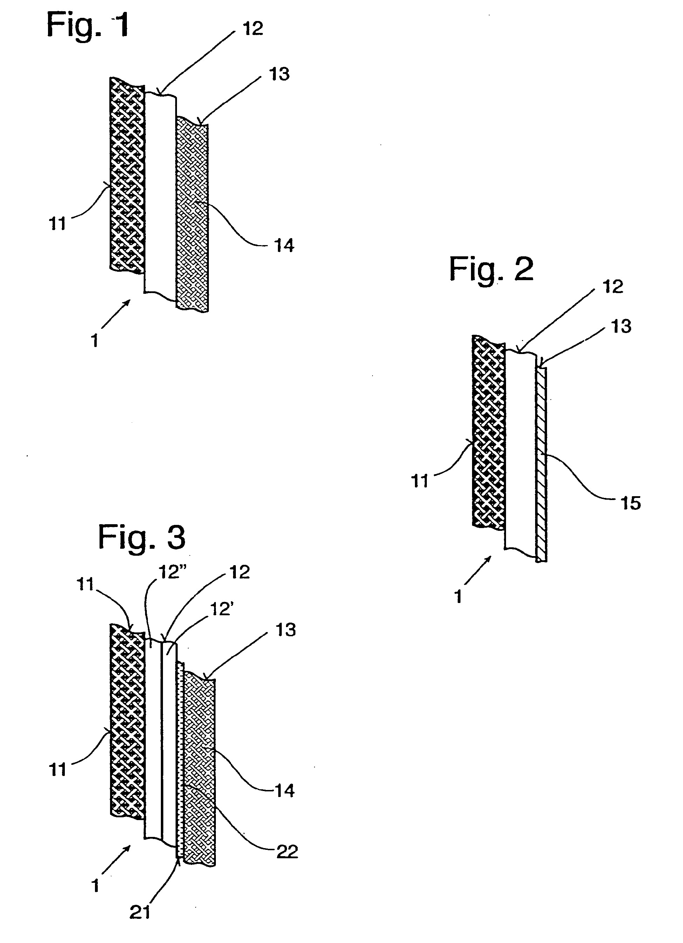

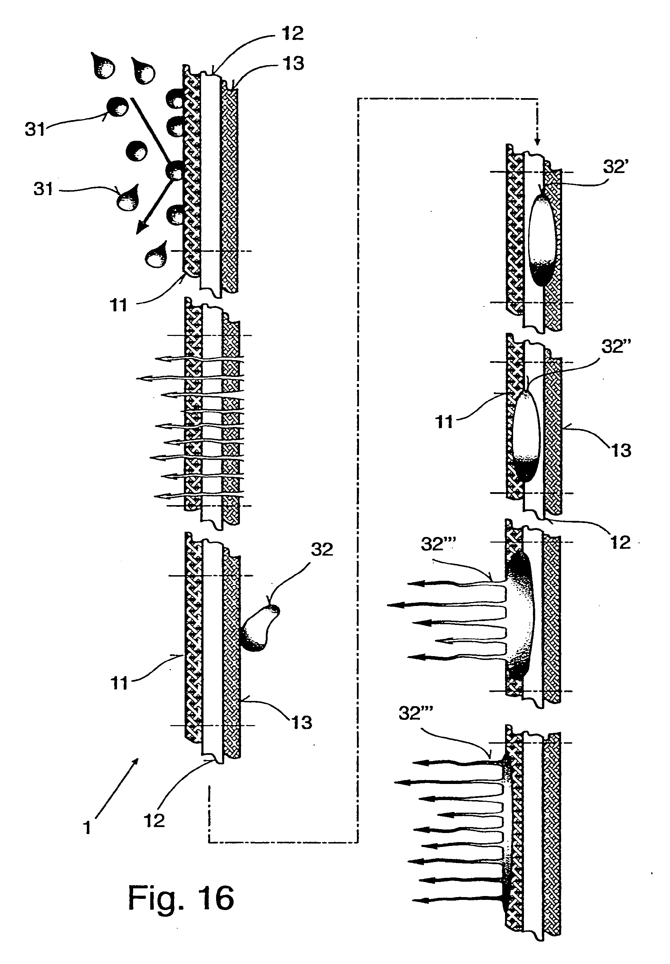

Der in den Fig. 1 bis 3 dargestellte und jeweils mit 1 bezeichnete flexible Verbundstoff dient zur Herstellung von wetterfesten Bekleidungsstücken, Zelten und ähnlichen im Außenbereich verwendbaren Gegenständen und besteht aus einer Außenlage 11 aus einem textilen Gewebe als Oberstoff, einer hydrophilen Membran 12 sowie einer Innenlage 13, die gemäß Fig. 1 aus einem hydrophilen textilen Flächengebilde 14 z. B. in Form eines Futterstoffes, oder nach Fig. 2 aus einer Schichtauflage 15 gebildet ist. Damit von der Innenlage 13 Flüssigkeit in Form von Wassertropfen, wie dies anhand der Figur 16 erläutert ist, aufgenommen und in einem großen Bereich der hydrophilen Membran 12 zugeführt werden kann, ist der Futterstoff 14 entspannt bzw. die Schicht 15 weist hydropische Eigenschaften auf.

Als hydrophiles textiles Flächengebilde 14 kann auch ein Vliesstoff, der hydropisch ausgerüstet und mittels eines hydrophilen Klebstoffes an der Membran 12 befestigt ist, vorgesehen werden. Die hydrophile Schichtauflage 15 der Membran 12 kann aus einer Schaumschicht oder einer weiteren Membran, die mit einer Trockenschicht versehen sein sollte, gebildet sein.

Um die Wirkung der Innenlage 13 zu erhöhen, ist gem. Figur 3 der hydrophilen Membran 12 eine hydrophisch reagierende Schicht 21 zugeordnet, die aus einem entspannten textilen Gewebe 22, einer freuchtigkeitsvernetzenden Klebeschicht, einer microporösen Polyurethanschicht, einem Fliesstoff oder einer Schaumstoffschicht bestehen kann. Durch die hydropisch reagierende Schicht 21 wird ein Wassertropfen zusätzlich großflächig verteilt und somit auf einen großen Bereich der hydrophilen Membran 12 zugeleitet, so daß eine Diffusion über einen großen Bereich der hydrophilen Membran 12 gegeben ist.

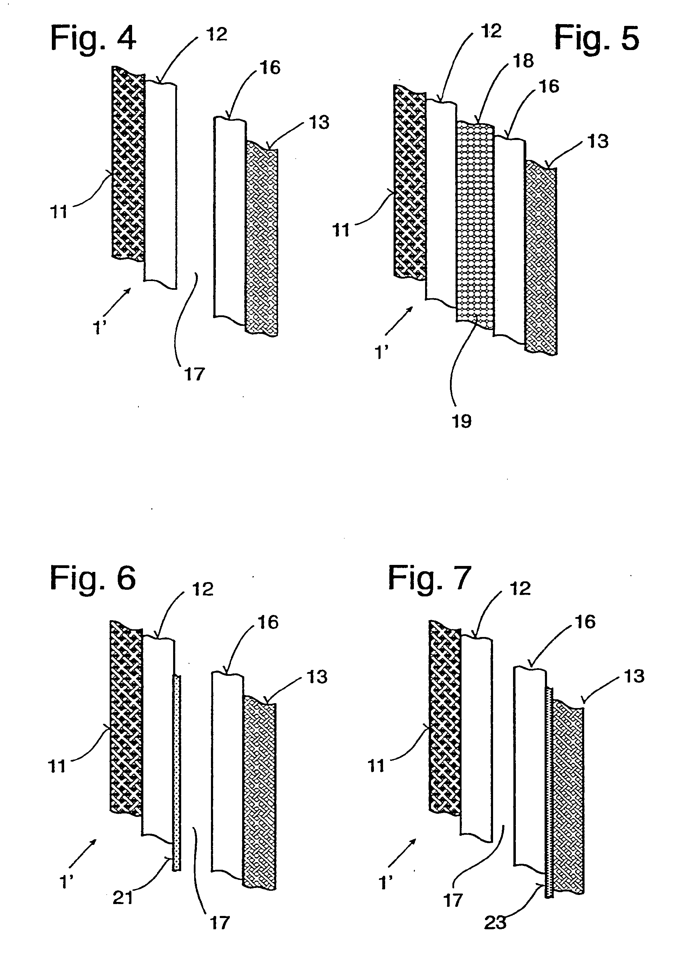

In den Fig. 4 bis 10 sind flexible Verbundstoffe 1' in unterschiedlichen Ausgestaltungen dargestellt, die mit einer zusätzlichen hydrophilen Membran 16 sowie einer zusätzlichen hydropisch wirkenden Schicht 23 versehen sind.

Gemäß Fig. 4 ist sowohl an der Außenlage 11 als auch an der Innenlage 13 jeweils eine hydrophile Membran 12 bzw. 16 angebracht, die mit Abstand zueinander angeordnet sind, so daß sich ein Zwischenraum 17 ergibt. Nach Fig. 5 ist der Zwischenraum zwischen den Membranen 12 und 16 durch einen Abstandshalter 18 ausgefüllt, der zum Beispiel aus einer Schaumstoffschicht 19, die isolierend wirkt, gebildet ist.

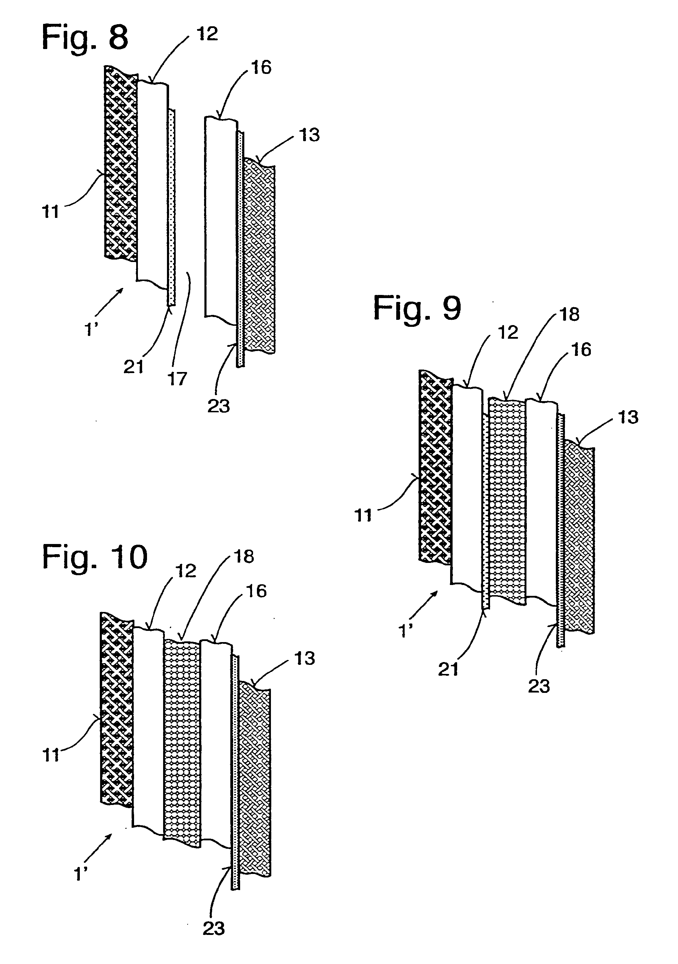

Bei dem Verbundstoff 1' nach den Fig. 6 und 7 ist der an der Außenlage 11 angebrachten hydrophilen Membran 12 bzw. der an der Innenlage 13 angebrachten hydrophilen Membran 16 jeweils eine hydropisch reagierende Schicht 21 bzw. 23 zugeordnet. Bei den Ausführungsvarianten nach den Fig. 8, 9 und 10 sind dagegen beide hydrophile Membrane 12 und 16 mit einer hydropisch reagierenden Schicht 21 und 23 ausgestattet, und der bei der Variante nach Fig. 8 gegebene Zwischenraum 17 ist bei der Variante nach Figur 9 mit einem Abstandshalter 18 oder einer Isolierung ausgefüllt. Gemäß Fig. 10 ist lediglich der hydrophilen Membran 16 eine hydropisch wirkende Schicht 23 zugeordnet.

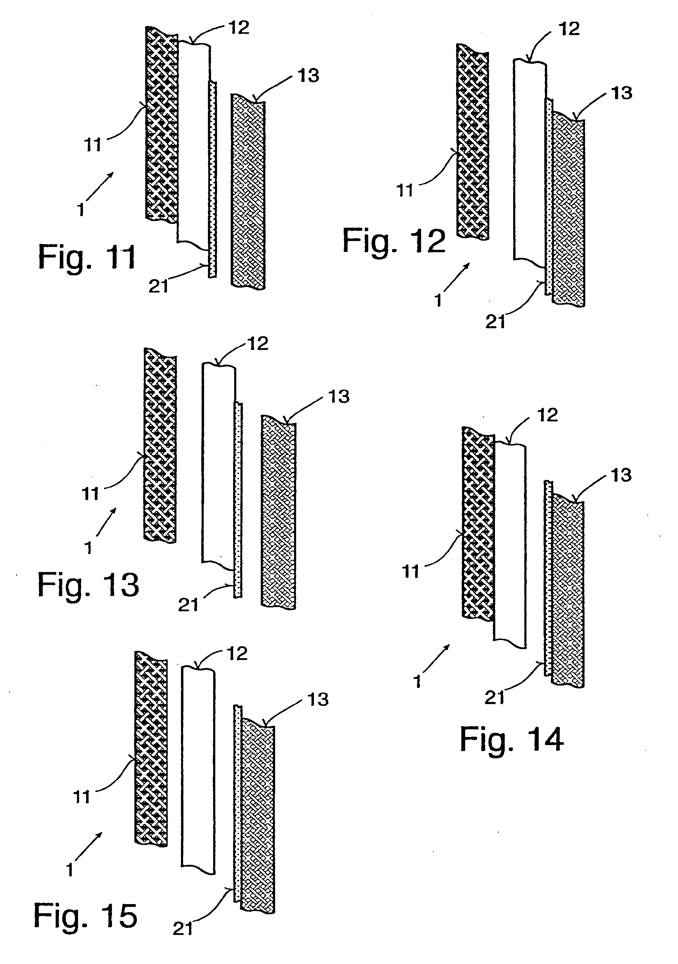

In den Fig. 11 bis 15 sind unterschiedliche Verbindungen der einzelnen Lagen des flexiblen Verbundstoffes 1 gezeigt. Nach Fig. 11 sind die Außenlage 11, die hydrophile Membran 12 und die hydropisch reagierende Schicht 21 zusammengeklebt oder durch Prägen miteinander verbunden, die Innenlage 13 ist dagegen nur im Randbereich eines nicht dargestellten Kleidungsstückes an diesen angenäht oder angeklebt. Gemäß Fig. 12 bilden in gleicher Weise die Innenlage 13, die hydropisch wirkende Schicht 21 sowie die Membran 12 einen Verbund, an dem die Außenlage 11 in Randbereichen befestigt ist.

Nach Fig. 13 bildet die hydropisch wirkende Schicht 21 den Träger für die hydrophile Membran 12, die mit der Außenlage 11 und der Innenlage 13 in Randbereichen vernäht bzw. verklebt ist. In gleicher Weise sind gem. Fig. 14 die beiden fest miteinander verbundenen Teile, nämlich einerseits die Außenlage 11 mit der hydrophilen Membran 12 sowie andererseits die Innenlage 13 mit der hydrophisch reagierenden Schicht 21 miteinander vernäht. Nach Fig. 15 ist die Außenlage 11 von der hydrophilen Membran 12 getrennt, deren Verbindung mit der mit der hydropisch wirkenden Schicht 21 versehenen Innenlage 13 erfolgt ebenfalls im Randbereich eines Kleidungsstückes.

In Fig. 16 ist die Funktionsweise des flexiblen Verbundstoffes 1 gezeigt. Wird die imprägnierte Außenlage 11 von Wassertropfen 31 beaufschlagt, so werden diese abgestoßen, so daß von außen keine Feuchtigkeit in den Verbundstoff 1 gelangt. Außerdem ist der Verbundstoff 1 winddicht.

Durch die Innenlage 13, die hydrophile Membran 12 sowie die Außenlage 11 kann dagegen von Innen aufgrund der sich durch den Temperaturunterschied ergebenden Druckdifferenz Wasserdampf von Innen nach Außen in die Atmosphäre gelangen.

Die Innenschicht 13 ermöglicht es des weiteren, dass das auf der Innenseite des Verbundstoffes 1 anfallende Wasser, zum Beispiel in Form von Schweißperlen 32, in kurzer Zeit nach Außen transportiert wird. Berührt nämlich eine Schweißperle 32 die Innenlage 13, so wird die Feuchtigkeit aufgrund der hydrophilen Eigenschaft der Innenlage 13 sofort über einen großen Bereich als flächiger Tropfen 32' in dieser verteilt, so dass die hydrophile Membran 12 auf einer großen Fläche beaufschlagt wird und der Wassertropfen 32' durch diese als Gebilde 32" in die Außenlage 11 hindurchdiffundiert.

Aus der Außenlage 11 wird die Feuchtigkeit 32'" ebenfalls auf einer großen Fläche in die Atmosphäre abgeführt, so dass durch den flexiblen Verbundstoff 1 sowohl Dampf als auch Flüssigkeit von der Innenlage 13 in die Außenlage 11 transportiert und somit zuverlässig und in kurzer Zeit abgeführt wird.

In dieser Anmeldung wird verstanden unter "hydrophil" - wasseranziehend bzw. wasseraufnehmend, unter "hydropisch" - wassersüchtig (Steigerung von hydrophil) und unter "hydrophob" - wasserabstoßend.

## Patentansprüche

1. Flexibler Verbundstoff (1) zur Herstellung von wetterfesten Bekleidungsstücken, Zelten, Schlafsäcken, Schuhen und Schuhzwischenwänden oder ähnlichen im Außenbereich einsetzbaren Gegenständen, der aus einer Außenlage (11) aus einem textilen Gewebe oder dergleichen als Oberstoff, einer hydrophilen Membran (12) und einer durch ein textiles Flächengebilde (14) oder durch eine Schichtauflage (15) auf der Membran (12) bestehenden Innenlage (13) zusammengesetzt ist,
**dadurch gekennzeichnet,**
**dass** das textile Flächengebilde (14) der Innenlage (13) des Verbundstoffes (1) ein Vließstoff ist, der hydropisch ausgerüstet ist, oder dass die Schichtauflage (15) der Membran (12) aus einer Membran besteht, die hydropisch ausgebildet ist.

2. Verbundstoff nach
Anspruch 1,
**dadurch gekennzeichnet, dass** der zwischen der Außenlage (11) und der Innenlage (13) des Verbundstoffes (1) angeordneten hydrophilen Membran (12) eine hydropisch reagierende Schicht (21) zugeordnet ist, die zwischen der hydrophilen Membran (12) und der Innenlage (13) vorgesehen ist.

3. Verbundstoff nach Anspruch 2,
**dadurch gekennzeichnet,**
**dass** die hydropisch reagierende Schicht (21) durch ein entspanntes textiles Gewebe (22), durch eine feuchtigkeitsvernetzende Klebeschicht oder eine microporöse Polyurethanschicht, einen Vliesstoff oder eine Schaumstoffschicht gebildet ist.

4. Verbundstoff nach Ansprüche 1 bis 3,
**dadurch gekennzeichnet,**
**dass** das textile Flächengebilde (14) des Verbundstoffes (1) mittels eines hydrophilen Klebstoffes an der hydrophilen Membran (12) befestigt ist.

5. Verbundstoff nach Anspruch 4,
**dadurch gekennzeichnet,**
**dass** der Vliesstoff (14) durch einen hydrophilen Klebstoff verfestigt ist.

6. Verbundstoff nach einem oder mehreren
der Ansprüche 1 bis 5,
**dadurch gekennzeichnet,**
**dass** die Innenlage (13) des Verbundstoffes (1') auf der Innenseite mit einer zweiten hydrophilen Membran (16) versehen ist.

7. Verbundstoff nach Anspruch 6,
**dadurch gekennzeichnet,**
**dass** die beiden Membrane (12, 16) mit Abstand zueinander angeordnet sind.

8. Verbundstoff nach Anspruch 6 oder 7,
**dadurch gekennzeichnet,**
**dass** der inneren und/oder der äußeren Membran (12 bzw. 16) des Verbundstoffes (1') eine hydropisch reagierende Schicht (21 bzw. 23) aus einem entspannten textilen Gewebe, einer feuchtigkeitsvernetzenden Klebeschicht oder einer microporösen Polyurethanschicht, einem Vliesstoff oder einer Schaumstoffschicht zugeordnet ist.

9. Verbundstoff nach einem oder mehreren der
Ansprüche 6 bis 8,
**dadurch gekennzeichnet,**
**dass** zwischen den beiden Membranen (12, 16) als Abstandshalter (18) und/oder Wasserspeicher und/oder als Isolierung eine ein- oder mehrteilige hydropische Schicht (19), ein Gewebe, ein Vliesstoff oder eine microporöse Polyurethanschicht oder dgl. vorgesehen ist.

10. Verbundstoff nach einem oder mehreren
der Ansprüche 1 bis 9,
**dadurch gekennzeichnet,**
**dass** der zwischen der Außenlage (11) und der Innenlage (13) des Verbundstoffes (1) zugeordneten hydrophilen Membran (12) des Verbundstoffes (1, 1') zwei oder mehrere Schichten (12', 12") aufweist und das die der Innenlage (13) des Verbundstoffes (1) zugekehrte Schicht (12') hydrophil reagierend ausgebildet ist.

11. Verbundstoff nach einem oder mehreren
der Ansprüche 1 bis 10,
**dadurch gekennzeichnet,**
**dass** die hydrophile Membran (12) aus Copolyetherester Copolymeren, Copolyäther Amide und aus Polyurethan hergestellt ist.

12. Verbundstoff nach einem oder mehreren
der Ansprüche 1 bis 11,
**dadurch gekennzeichnet,**
**dass** der die Außenlage (11) des Verbundstoffes (1) bildende Oberstoff aus Leder besteht.

13. Verbundstoff nach einem oder mehreren
der Ansprüche 2 bis 12,
**dadurch gekennzeichnet,**
**dass** die Innenlage (13) ganz oder teilweise oder nur in den Randbereichen eines Bekleidungsstückes oder eines anderen Gegenstandes mit der hydrophilen Membran (12) und/oder der hydropischen Schicht (21) verbunden, beispielsweise verklebt oder vernäht, ist.

14. Verbundstoff nach einem oder mehreren
der Ansprüche 2 bis 12,
**dadurch gekennzeichnet,**
**dass** die hydropisch reagierende Schicht (21) als Träger fest an der hydrophilen Membran (12) angebracht ist und daß die Membran (12) mit der Außenlage (11) und der Innenlage (13) oder die hydropisch reagierende Schicht (21) mit der Innenlage (13) und der Membran (12) sowie der Außenlage (11) ganz oder teilweise oder nur in den Randbereichen eines Bekleidungsstückes oder eines anderen Gegenstandes miteinander verbunden, beispielsweise verklebt oder vernäht, ist.

15. Verbundstoff nach einem oder mehreren
der Ansprüche 2 bis 12,
**dadurch gekennzeichnet,**
**dass** die Außenlage (11) als Träger der hydrophilen Membran (12) fest an dieser und die hydropisch reagierende Schicht (21) fest an der Innenlage (13) des Verbundstoffes (1) angebracht sind und daß die Außenlage (11) mit der hydrophilen Membran (12) und die Innenlage (13) mit der hydropisch reagierenden Schicht (21) nur in den Randbereichen eines Bekleidungsstückes oder eines ähnlichen Gegenstandes miteinander verbunden, beispielsweise verklebt oder vernäht, sind.

16. Verbundstoff nach einem oder mehreren
der Ansprüche 2 bis 12,
**dadurch gekennzeichnet,**
**dass** die Innenlage (13) als Träger der hydrophilen Membran (12) fest an dieser angebracht ist und dass die Innenlage (13) mit der hydrophilen Membran (12), der hydropisch wirkenden Schicht (21) sowie der Außenlage (11) nur in den Randbereichen eines Kleidungsstückes oder eines ähnlichen Gegenstandes miteinander verbunden, beispielsweise verklebt oder vernäht, sind.

## Claims

1. A flexible composite material (1) for the manufacture of weatherproof garments, tents, sleeping bags, shoes and shoe partitions or the like that are used for outdoor activities, comprising an outer layer (11) made from a textile fabric or the like as an upper material, a hydrophilic membrane (12) and an inner layer (13) consisting of a textile fabric (14) or a laminated layer (15) on the membrane (12),
**characterized in that**,
the textile fabric (14) of the inner layer (13) of the composite material (1) is a nonwoven material with hydropic properties, or that the laminated layer (15) of the membrane (12) consists of a membrane that has hydropic properties.

2. The composite material in accordance with Claim 1,
**characterized in that**,
the membrane (12) arranged between the outer layer (11) and the inner layer (13) of the composite material (1) has a layer (21) with hydropic properties assigned to it that is provided between the hydrophilic membrane (12) and the inner layer (13).

3. The composite material in accordance with Claim 2,
**characterized in that**,
the hydropically reacting layer (21) is formed by a relaxed textile fabric (22), a moisture cross-linking adhesive layer or a microporous polyurethane layer, a nonwoven material or a foam layer.

4. The composite material in accordance with one of Claims 1 to 3,
**characterized in that**,
the textile fabric (14) of the composite material (1) is attached to the hydrophilic membrane (12) by means of a hydrophilic adhesive.

5. The composite material in accordance Claim 5,
**characterized in that**,
the nonwoven material (14) is attached by means of a hydrophilic adhesive.

6. The composite material in accordance with one or more of Claims 1 to 5,
**characterized in that**,
the inner layer (13) of the composite material (1') has a second hydrophilic membrane (16) on the inside.

7. The composite material in accordance with Claim 7,
**characterized in that**,
both membranes (12, 16) are arranged with a gap in between them.

8. The composite material in accordance with Claim 6 or 7,
**characterized in that**,
the inner and/or outer membrane (12 or 16) of the composite material (1') has a hydropically reacting layer (21 or 23) assigned to it that consists of a relaxed textile fabric, a moisture cross-linking adhesive layer or a microporous polyurethane layer, a nonwoven material or a foam layer.

9. The composite material in accordance with one or more of Claims 6 to 8,
**characterized in that**,
a one or multi-piece hydropic layer (19), a fabric, a nonwoven material or a microporous polyurethane layer or the like is provided between the two membranes (12, 16) as a spacer (18) and/or water reservoir and/or insulation.

10. The composite material in accordance with one or more of Claims 1 to 9,
**characterized in that**,
the hydrophilic membrane (12) of the composite material (1, 1') arranged between the outer layer (11) and the inner layer (13) of the composite material (1) has two or more layers (12', 12") and that the layer (12') facing the inner layer (13) of the
composite material (1) has hydrophilic properties.

11. The composite material in accordance with one or more of Claims 1 to 10,
**characterized in that**,
the hydrophilic diaphragm (12) is manufactured from copolyether ester, copolymers, copolyether amides and of polyurethane.

12. The composite material in accordance with one or more of Claims 1 to 11,
**characterized in that**,
the upper material comprising the outer layer (11) of the composite material (1) is leather.

13. The composite material in accordance with one or more of Claims 2 to 12,
**characterized in that**,
the inner layer (13) is connected to the hydrophilic membrane (12) and/or the hydropic layer (21) entirely or partially or only in the marginal areas of a garment or another object, for example by gluing or sewing.

14. The composite material in accordance with one or more of Claims 2 to 12,
**characterized in that**,
the hydropically reacting layer (21) is firmly attached to the hydrophilic membrane (12) as a carrier and that the membrane (12) is connected to the outer layer (11) and the inner layer (13) or the hydropically reacting layer (21) is connected to the inner layer (13) and the membrane (12) as well as the outer layer (11) entirely or partially or only in the marginal areas of a garment or another object, for example by gluing or sewing.

15. The composite material in accordance with one or more of Claims 2 to 12,
**characterized in that**,
the outer layer (11) is firmly attached to the hydrophilic membrane (12) as a carrier and that the hydropically reacting layer (21) is firmly attached to the inner layer (13) of the composite material (1) and that the outer layer (11) is connected to the hydrophilic membrane (12) and the inner layer (13) is connected to the hydropically reacting layer (21) only in the marginal areas of a garment or another object, for example by gluing or sewing.

16. The composite material in accordance with one or more of Claims 2 to 12,
**characterized in that**,
the inner layer (13) is firmly attached to the hydrophilic membrane (12) as the carrier of the hydrophilic membrane (12) and that the inner layer (13) is only connected to the hydrophilic membrane (12), the hydropically acting layer (21) and the outer layer (11) in the marginal areas of a garment or another object, for example by gluing or sewing.

## Revendications

1. Tissu composite flexible (1) pour la fabrication de vêtements résistant aux intempéries, de tentes, de sacs de couchage, de chaussures et couches de chaussures ou d'objets similaires utilisés à l'air libre, consistant d'une couche extérieure (11) en tissu textile ou d'un tissu similaire en tant que couche de recouvrement, d'une membrane hydrophile (12) et d'une couche intérieure (13) consistant d'une nappe de tissu textile (14) ou d'une couche de recouvrement (15) sur la membrane (12),
**caractérisé en ce que**
la nappe de tissu textile (14) de la couche intérieure (13) du tissu composite (1) est un matériau en feutre à caractéristique hydropique ou que la couche de recouvrement (15) de la membrane (12) consiste d'une membrane à caractéristique hydropique.

2. Tissu composite d'après la revendication 1,
**caractérisé en ce que**,
à la membrane hydrophile (12) disposée entre la couche extérieure (11) et la couche intérieure (13) du tissu composite (1), il est assigné une couche à réaction hydropique (21), qui est disposée entre la membrane hydrophile (12) et la couche intérieure (13).

3. Tissu composite d'après la revendication 2,
**caractérisé en ce que**
la couche à réaction hydropique (21) consiste d'un tissu textile détendu (22), d'une couche de colle à action hydropique ou d'une couche polyuréthane microporeuse, d'un matériau en feutre ou d'une couche en matière spongieuse.

4. Tissu composite d'après une des revendications 1 à 3,
**caractérisé en ce que**
la nappe de tissu textile (14) du tissu composite (1) est fixée par une colle hydrophile sur la membrane hydrophile (12).

5. Tissu composite d'après la revendication 4,
**caractérisé en ce que**
le matériau en feutre (14) est consolidé par une colle hydrophile.

6. Tissu composite d'après une ou plusieurs des revendications 1 à 5,
**caractérisé en ce que**
la couche intérieure (13) du tissu composite (1') comporte, sur sa face intérieure, une deuxième membrane hydrophile (16).

7. Tissu composite d'après la revendication 6,
**caractérisé en ce que**
les deux membranes (12, 16) sont disposées à une certaine distance l'une de l'autre.

8. Tissu composite d'après la revendication 6 ou 7,
**caractérisé en ce que**,
à la membrane intérieure et/ou à la membrane extérieure (12 ou 16) du tissu composite (1'), il est assigné une couche à réaction hydropique (21 ou 23) en tissu textile détendu, une couche de colle à action hydropique ou une couche polyuréthane microporeuse, un matériau en feutre ou une couche en matière spongieuse.

9. Tissu composite d'après une ou plusieurs des revendications 6 à 8,
**caractérisé en ce que**,
entre les deux membranes (12, 16) il est prévu en tant qu'écarteur (18) et/ou en tant que réservoir d'eau et/ou en tant qu'isolement une couche hydropique divisée ou non divisée (19), un tissu, un matériau en feutre, une couche polyuréthane microporeuse ou un matériau similaire.

10. Tissu composite d'après une ou plusieurs des revendications 1 à 9,
**caractérisé en ce que**
la membrane hydrophile (12) du tissu composite (1, 1') prévue entre la couche extérieure (11) et la couche intérieure (13) du tissu composite (1) comporte deux ou plusieurs couches (12', 12") et que la couche (12') donnant vers la couche intérieure (13) du tissu composite (1) est à réaction hydrophile.

11. Tissu composite d'après une ou plusieurs des revendications 1 à 10,
**caractérisé en ce que**
la membrane hydrophile (12) est réalisée en copolyétherester, copolymères, amides copolyéther ou en polyuréthane.

12. Tissu composite d'après une ou plusieurs des revendications 1 à 11,
**caractérisé en ce que**
le recouvrement formant la couche extérieure (11) du tissu composite (1) est réalisé un cuir.

13. Tissu composite d'après une ou plusieurs des revendications 2 à 12,
**caractérisé en ce que**
la couche intérieure (13) est liée, p.ex. collée ou cousue, à la membrane hydrophile (12) et/ou à la couche hydropique (21), entièrement ou partiellement ou seulement sur les bords extérieurs d'un vêtement ou d'un objet similaire.

14. Tissu composite d'après une ou plusieurs des revendications 2 à 12,
**caractérisé en ce que**
la couche à réaction hydropique (21) est fixée en tant que support sur la membrane hydrophile (12) et que la membrane (12), la couche extérieure (11) et la couche intérieure (13) ainsi que la couche à réaction hydropique (21), la couche intérieure (13), la membrane (12) et la couche extérieure (11) sont liées ensemble, p.ex. collées ou cousues, entièrement ou partiellement ou seulement sur les bords extérieurs d'un vêtement ou d'un objet similaire.

15. Tissu composite d'après une ou plusieurs des revendications 2 à 12,
**caractérisé en ce que**
la couche extérieure (11) en tant que support de la membrane hydrophile (12) est fixée sur celle-ci et la couche à réaction hydropique (21) est fixée sur la couche intérieure (13) du tissu composite (1), et que la couche extérieure (11) et la membrane hydrophile (12) ainsi que la couche intérieure (13) et la couche à réaction hydropique (21) ne sont liées ensemble, p.ex. collées ou cousues, que sur les bords extérieurs d'un vêtement ou d'un objet similaire.

16. Tissu composite d'après une ou plusieurs des revendications 2 à 12,
**caractérisé en ce que**
la couche intérieure (13) en tant que support de la membrane hydrophile (12) est fixée sur celle-ci et que la couche intérieure (13) avec la membrane hydrophile (12), la couche à réaction hydropique (21) ainsi que la couche extérieure (11) ne sont liées ensemble que sur les bords extérieurs d'un vêtement ou d'un objet similaire.
